# EUROPEAN PATENT APPLICATION

(11) **EP 3 932 874 A1**
(43) Date of publication of application: **05.01.2022**
(21) Application number: 21183048.4
(22) Date of filing: 01.07.2021
(51) Int. Cl.: C02F 11/04, C02F 11/18, C02F 103/32, C02F 1/66, C02F 1/72, C02F 1/74, C02F 1/78, C02F 1/76, C02F 103/34, C02F 103/36

(54) **THERMAL ALKALINE OXIDATIVE HYDROLYSIS PRETREATMENT FOR WWTP SLUDGE ANAEROBIC DIGESTION**

(30) Priority: 03.07.2020 IT 202000016144
(71) Applicant: Newlisi S.p.A., 20121 Milano (IT)
(72) Inventor: ACEBES TOSTI, Lorenzo, 02100 RIETI (IT); FIORIN, David, 58100 GROSSETO (IT); GIANICO, Andrea, 00176 ROMA (IT); GALLIPOLI, Agata, 75024 Montescaglioso (MT) (IT)
(74) Representative: Bottero, Carlo

(57) **Abstract**

The present invention relates to a process for producing biogas, which comprises: subjecting depuration sludges to a pretreatment phase which comprises, as the sole hydrolysis phase, a thermal alkaline oxidative hydrolysis phase; subjecting the pretreated sludges to an anaerobic digestion process in order to obtain biogas. This process is applicable to a wide range of urban and industrial depuration sludges, in particular to depuration sludges with high salinity levels, characterized by an overall content of sulphates and chlorides equal to or greater than 800 mg/mL. This process allows to increase the methane fraction inside the biogas produced, so as to improve its quality in terms of energy yield.

## Description

The present invention relates to a process for producing biogas by means of anaerobic digestion of depuration sludges deriving from civil or industrial wastewater treatment processes, which have been pretreated by a thermal alkaline oxidative hydrolysis process.

As is known, the anaerobic digestion of waste can be used for producing biogas, which is essentially a mixture of methane (55-75% vol) and carbon dioxide (25-45% vol), which constitutes a source of renewable energy and can be used for the production of thermal energy or for the co-generation of electricity and heat.

The anaerobic digestion processes are based on the use of a consortium of microorganisms (hydrolytic-fermentative-methanogenic) that are able to metabolize the organic material present in the waste in anaerobic conditions with the production of methane. The different types of anaerobic digestion can be classified according to the temperature conditions at which these microorganisms operate (psychrophilic processes: 4-25°C, mesophilic processes: 25-40°C; thermophilic processes: 45-70°C).

One of the substrates that can be used for anaerobic digestion with biogas production are made up of depuration sludges deriving from wastewater treatment processes. As is known, wastewater, both urban and industrial, must be subjected to treatment processes in order to reduce their impact on the environment as much as possible, by abating its polluting load. Such treatment processes typically use a combination of chemical, physical and biological treatments.

Two types of depuration sludges accumulate downstream of the treatment processes, namely those obtained by sedimentation of the coarse material in suspension (primary or chemical-physical sludge), and those obtained by sedimentation following the biological treatment process (secondary or biological sludge). It should be noted that, in the context of the present description and the attached claims, the term "depuration sludges" refers to both primary and secondary sludges.

Depending on the type of treatment process adopted and the nature of the wastewater treated, the depuration sludges can have a highly variable composition. For example, the depuration sludges obtained from chemical-physical processes can contain a substantial amount of inorganic products, such as carbonates and silicates, as well as iron and/or aluminum salts added to favor flocculation and sedimentation. The secondary sludges, coming from biological processes, essentially contain organic material (biomass flakes having a complex composition, proteins, lipids, carbohydrates, etc.).

The treatment and disposal of depuration sludges constitutes a significant problem from an environmental and economic point of view, affecting the management costs of a wastewater treatment plant in a very significant way. Such sludges are generally recovered in agriculture as soil improvers (if in possession of the quality requirements demanded by the European directive 86/278/EEC, implemented in Italy by Legislative Decree 99/92) or disposed of by mechanical dehydration and subsequent disposal in landfills or incineration.

To contain disposal costs, some technologies have been developed that are able to substantially reduce the quantity of sludges obtained from treatment plants.

WO 2011/036550, in the name of the same Applicant, describes a process for the treatment of waste, in particular of depuration sludges, which allows to reduce the content of chemical and/or biological pollutants and to significantly reduce the volume of sludges themselves. This process comprises the following steps: (a) acid oxidative hydrolysis of the incoming feed; (b) alkaline oxidative hydrolysis of the charge leaving the oxidative acid hydrolysis step; (c) chemical conditioning of the charge leaving the alkaline oxidative hydrolysis step; (d) separation of the undissolved residue, if any. Through this process, it is possible to completely oxidize, with the formation of carbon dioxide and water, a high percentage of the organic fraction present in the sludges, while the remaining fraction is transformed into water-soluble compounds that are not harmful to the environment. Any solid residue left after the treatment can be easily separated by common filtration, sedimentation or mechanical dehydration techniques.

Further improvements, especially from the plant engineering point of view, of the process according to the aforementioned WO 2011/036550 are described in the application WO 2016/088073, in the name of the same Applicant.

The anaerobic digestion of secondary sludges are characterized by low rates of removal of volatile solids, due to the structure of the flakes that make up such sludges. In order for the organic substance to be degraded by microorganisms, a preliminary phase of breaking the flakes (hydrolysis) is required, by the hydrolytic bacteria. Since this phase is characterized by slow kinetics, it is often considered the limiting phase of the entire anaerobic process.

To overcome this problem, pretreatments of hydrolysis (chemical, physical, thermal, enzymatic) have been studied aimed at increasing the biodegradability of the biological sludges before anaerobic digestion and the abatement of the organic substance and therefore the consequent production of biogas.

Among the various pretreatments applied to urban depuration sludges, the most effective were those that use thermal or thermo-chemical hydrolysis processes upstream of anaerobic digestion. The results of the application of these pretreatments to industrial sludges, on the other hand, highlighted various limits, essentially due to the highly variable characteristics of these sludges.

The possibility of using the process described in WO 2011/036550 upstream of the anaerobic digestion, with the dual purpose of reducing the volumes of sludges produced and increasing the production of biogas, is described in Italian patent No. 102016000121031, in the name of the same Applicant, in which the use of a two-phase thermochemical pretreatment, one acidic and one alkaline, upstream of the anaerobic digestion, is proposed. This process has been confirmed to be able to obtain overall reductions of outgoing sludges of the order of 65-75%, accompanied by an average increase of 35-45% of produced methane.

However, in some cases the above two-phase process was not able to achieve the required performance, having shown technical limitations in the pretreatment of some types of industrial sludges or civil sludges from treatment plants equipped with chemical dephosphatation by using coagulating/flocculating agents. These sludges are in fact characterized by the presence of hydroxides in high concentrations, which hinder the hydrolysis process, drastically reducing yields and increasing process costs.

Furthermore, the two-phase process has shown limitations in the presence of industrial sludges having high salt concentrations, in particular sludges characterized by an overall content of sulphates and chlorides equal to or greater than 800 mg/L. The two-phase pretreatment in fact involves a further increase in salinity level of the sludges so as to:
- be potentially inhibiting for the subsequent anaerobic digestion process;
- compromise the quality of both the sludges leaving the digestion and the final effluent.

One of the aims of the present invention is to realize a process for producing biogas by means of anaerobic digestion, applicable to a wide range of urban and industrial depuration sludges, which provides for their pretreatment in order to increase bioavailability of the organic fraction contained therein by improving the performance of anaerobic digestion and allowing a significant reduction in the sludges to be disposed of.

Another object of the present invention is to carry out a process for producing biogas by means of anaerobic digestion even on depuration sludges with high salinity levels, in particular depuration sludges characterized by an overall content of sulphates and chlorides equal to or greater than 800 mg/mL. These are sludges typically coming from agro-industrial wastewater treatment plants such as dairy waste, or other industrial wastewater such as those deriving from biorefinery processes (for example for butanediol biosynthesis).

Another object of the present invention is to provide a process for producing biogas by means of anaerobic digestion of depuration sludges, which allows increasing methane fraction inside the biogas produced, so as to improve its quality in terms of energy yield.

These and other objects of the present invention have been achieved by the Applicant by means of a process for producing biogas which comprises a pretreatment phase of the depuration sludges by means of thermal alkaline oxidative hydrolysis, without further hydrolysis phases, in particular without the acid oxidative hydrolysis phase as provided for by the process according to the Italian patent No. 102016000121031 mentioned above. The pretreated sludges, possibly conditioned to obtain a substantially neutral pH value, are then sent to the anaerobic digestion process in the presence of methanogenic bacteria, so as to obtain the biogas.

The present invention therefore relates to a process for producing biogas, which includes:
subjecting depuration sludges to a pretreatment phase which comprises, as the sole hydrolysis phase, a thermal alkaline oxidative hydrolysis phase;
subjecting the pretreated sludges to an anaerobic digestion process in order to obtain biogas.

The process according to the present invention is preferably carried out on depuration sludges characterized by an overall content of sulphates and chlorides equal to or greater than 800 mg/mL. These are generally depuration sludges obtained following a wastewater treatment process, of urban and/or industrial origin, said treatment process being able to be carried out with chemical-physical and/or biological means. More specifically, these are depuration sludges from wastewater treatment plants from the dairy industry, or wastewater deriving from biorefinery processes (for example for butanediol biosynthesis).

The sludges to be treated can possibly be subjected to a preliminary phase of mechanical disaggregation, in which they are crushed in order to wear out and tear any solids present and to disrupt the flakes formed by microorganisms usually present in large quantities, especially in the case of excess sludges. This mechanical disaggregation phase is advantageous as it allows reducing the time of the subsequent treatment in an alkaline environment, with an increase in the overall process yields.

The pretreatment phase of the depuration sludges comprises, as the only hydrolysis phase, a thermal alkaline oxidative hydrolysis phase. In particular, said pretreatment phase does not comprise an oxidative acid hydrolysis phase, as provided for by the process according to the aforementioned Italian patent No. 102016000121031.

Compared to conventional hydrolysis without oxidation, the use of an oxidizing agent allows obtaining different operating conditions with a substantial modification of the redox potential, which ranges from -400 mV, typical value of a sludge at pH = 10, to -150 mV, resulting in a considerable improvement in the process performance in terms of sludge reduction.

Furthermore, with respect to the process described in the Italian patent No. 102016000121031 mentioned above, the process according to the present invention allows obtaining a high reduction efficiency of the sludges to be disposed of (overall reduction of the outgoing sludges of the order of 45-55%). The high efficiency derives mainly from the effect of alkaline oxidative hydrolysis combined with the effect of the subsequent anaerobic digestion phase, with reduction of suspended solids and improvement of the centrifugability of the digested sludges with obvious advantages for the final dehydration phase of the sludges themselves.

The process also allows obtaining significant increases in methane produced (up to and over +35%), significantly reducing the investment and management costs of the plant (reduction of the order of 40-50%), the consumption of chemical reagents and the overall dimensions of the system itself.

Before subjecting the pretreated sludges to the anaerobic digestion process, they can be possibly subjected to neutralization so as to obtain a substantially neutral pH value, suitable for growth and metabolism of methanogenic bacteria.

The plant which carries out the pretreatment phase according to the present invention can be installed directly upstream of the anaerobic digester and can operate continuously so as to feed the anaerobic digestion phase in a continuous cycle.

Thermal alkaline oxidative hydrolysis allows the organic substance to be solubilized by hydrolysis (saponification). In this phase, for example, organic compounds containing amide bonds, complex cellular proteins, peptones, triglycerides, etc. are degraded.

The thermal alkaline oxidative hydrolysis phase is carried out at a pH value from 8 to 12, preferably from 9.5 to 11.5. The redox potential is preferably maintained between -300 mV and -150 mV, preferably around -150 mV. The process temperature is between 35°C and 100°C, preferably between 60°C and 90°C.

The mass to be treated is preferably kept in motion by mechanical stirring, while the duration of the treatment can vary within wide limits depending on the characteristics of the treated sludges. Generally, a duration between 120 and 240 min is sufficient.

The depuration sludges stream entering the process can be brought to the desired pH value by adding an inorganic or organic alkaline compound, selected for example from: alkali or alkaline-earth metal hydroxides; basic reaction salts such as carbonates, silicates, borates, phosphates; alkali or alkaline earth metal alcoholates or carboxylates; and similar. Such alkaline compounds are usually fed in the form of aqueous solutions or dispersions.

The alkaline pH value is preferably obtained by adding a strong alkaline compound such as NaOH, KOH, and the like to the incoming sludges.

The alkaline hydrolysis phase is carried out in the presence of an oxidizing agent, the dosage of which allows obtaining a significant increase in the solubilization efficiency and therefore a greater bioavailability of the organic fraction in the subsequent anaerobic phase.

The oxidizing agent can preferably be selected from:
a) air or oxygen enriched air blown into the mass to be treated, or liquid oxygen which is regasified in situ, which in an acid environment gives rise to the following redox half-reaction:

   O₂ + 4H⁺ + 4e⁻ → 2 H₂O
b) an inorganic peroxide, selected for example from: hydrogen peroxide (H₂O₂), ozone (O₃), perborates, percarbonates, perurea, peroxymonosulfates, peroxydisulfates, peroxyphosphates;
c) an organic peroxide, selected for example from:
   peracids, monoalkyl peroxides, dialkyl peroxides, acyl peroxides, cyclic peroxides, ozonides;
d) non-peroxidic inorganic oxidizing compounds, such as hypochlorites, chlorites, chlorates, permanganates.

The flow leaving the alkaline hydrolysis phase is then subjected to an optional neutralization phase, for example by mixing with possible other substrates that do not require pretreatment, or by adding a strong, organic or inorganic acid, in order to bring the alkaline pretreated sludges to a substantially neutral pH value, preferably between 7.0 and 8.0.

At this point, the pretreated sludges flowing out of the neutralization phase, rich in soluble organic substances, are ready to be used as a substrate for the anaerobic digestion process.

This anaerobic digestion process can preferably be carried out, on an industrial scale, in a mesophilic regime, i.e. at a temperature from 30°C to 40°C, preferably from 34°C to 38°C.

Anaerobic digestion can be carried out according to known methods, for example through digesters fed with low or medium organic matter load, preferably with a daily organic matter load (expressed as weight of volatile solids) per unit volume of the digester between 0,5 and 2 kg/m³.

The anaerobic digestion process can be carried out in single-stage or two-stage mode. In the single-stage digestion, only one digester is used, suitably heated to maintain the pre-established temperature regime, where the pretreated sludges are introduced. These sludges are kept under stirring inside the digester in order to hinder its thickening. This stirring can be obtained by mechanical means, such as for example helical pumps, or by recirculating the sludges outside the digester or by recirculating the biogas produced by the digestion process itself.

In the case of two-stage anaerobic digestion, two digesters are used instead:
(1) a primary digester, maintained at the pre-established temperature and equipped with a continuous stirring system, wherein most of the biological transformations of the organic substance into biogas are completed;
(2) a secondary digester, generally not heated and not stirred, in which the separation of a clarified supernatant and the uptake of the residual fraction of the biogas produced takes place.

In carrying out the process according to the present invention, mixing inside the digester is simplified thanks to the lower viscosity of the sludges to be treated due to the lower content of suspended solids, which are reduced by the pretreatment phase described above. Consequently, the process can also be carried out using digesters equipped with low-intensity mixing systems, without affecting their performance in terms of biogas production.

Alternatively, the anaerobic digestion can be carried out in thermophilic conditions, i.e. at a temperature ranging from 45°C to 70°C, preferably between 53°C and 60°C. In this case, by means of heat exchange systems, it is possible to manage the heat recovery of the energy production section (boiler or cogeneration) in order to guarantee achievement of the necessary process temperatures.

As regards the residence times of the sludges inside the anaerobic digester, these substantially depend on the type of digester used, the intrinsic characteristics of the sludges treated and the operating conditions of the process. In general, this residence time varies between 10 and 30 days.

The present invention will now be further described with reference to the following figures, in which:
Figure 1 is a schematic representation of the process object of the present invention;
Figure 2 shows the comparison between the experimental data of specific methane production obtained by applying, in a discontinuous system (batch), the process object of the present invention with respect to other processes applied on the same starting sludges;
Figure 3 shows the comparison between the experimental data of specific methane production obtained by applying, in a semi-continuous system, the process object of the present invention with respect to a conventional mesophilic anaerobic digestion process, i.e. carried out on non-pretreated sludges.

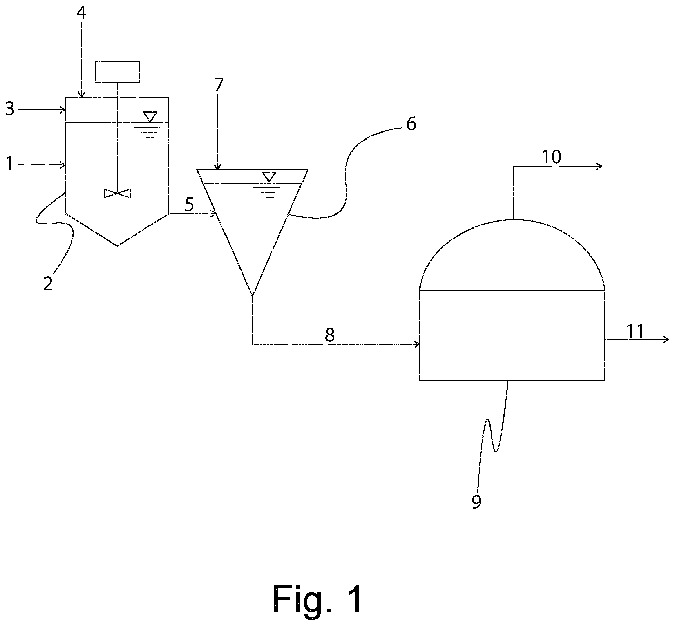

With reference to Figure 1, the depuration sludges (1) are fed to the alkaline hydrolysis reactor (2), in which the dosage of an alkaline compound (3) takes place and in which the temperature is maintained at the predetermined value. In order to carry out the thermal alkaline oxidative hydrolysis, this phase is preferably carried out by maintaining the redox potential around -150 mV by dosing an oxidizing reagent (4).

Downstream of the thermal alkaline oxidative hydrolysis phase, the pretreated sludge stream (5) is fed to a neutralization reactor (6) to control the pH by dosing an acidic compound (7), or by mixing with any other substrates that do not require pretreatment. Once neutralized, the pretreated sludges can be subjected to heat exchange in a heat exchanger (not shown in the figure), in order to recover both the heat produced by the hydrolysis phase and that possibly developed during the neutralization phase.

Finally, the pretreated sludges (8) are sent to the single or two-stage anaerobic digester (9). The biogas (10) is captured from the headspace of the digester and can be subsequently sent to possible upgrading processes, or conveyed to storage tanks, or directly used in energy production processes.

On the other hand, the residual sludges (11) are recovered from the bottom of the digester, which are dehydrated and disposed of according to known techniques. The liquid supernatant phase is generally recirculated at the top of the treatment plant, or also sent for disposal according to known techniques.

The following working embodiments are provided merely for illustrative purposes of the present invention and must not be construed as limiting the scope of protection defined by the appended claims.

### EXAMPLE 1.

Five different sludges samples from five different wastewater treatment plants underwent the same thermal alkaline oxidative hydrolysis process by using sodium hydroxide and hydrogen peroxide. More in detail, the process was carried out at a pH value between 9.5 and 11.5, maintaining the redox potential, through the dosage of H₂O₂, between -300 mV and -150 mV, at a constant temperature of about 80°C for a time of about 180 min.

This test was conducted in order to evaluate the solubilization efficiency of the suspended solids, and therefore the sludges reduction capacity, of the sole hydrolysis process applied to different types of sludges.

The sludges subjected to hydrolysis were:
- two biological sludges sampled from the overflow line downstream of the activated sludges tank of two civil wastewater treatment plants in which there is no chemical phosphorus removal (Plant A and Plant B);
- two biological sludges sampled from the overflow line downstream of the activated sludges tank of two civil waste treatment plants equipped with chemical phosphorus removal (Plant C and Plant D);
- biological sludges coming from an MBR (Membrane bioreactor) system, sampled at an industrial wastewater treatment plant equipped with chemical phosphorus removal (Plant E).

The quantity of Volatile Suspended Solids (VSS) and of Total Suspended Solids (TSS) was determined on the sludges thus pretreated in accordance with the standard method APHA, AWWA, WEF, 1998 - Standard Methods for the Examination of Water and Wastewater, 20th ed., American Public Health Association and American Water Works Association and Water Environment Federation, Washington DC.

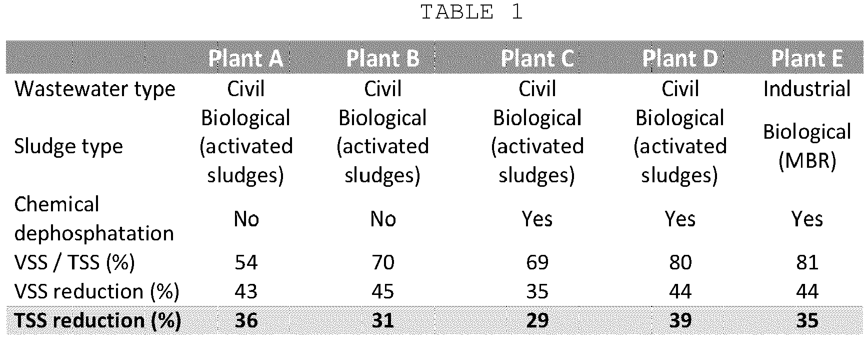

From the results reported in Table 1, it can be seen that the thermal alkaline oxidative hydrolysis process according to the present invention alone is able to guarantee a reduction of VSS between 35% and 45% and a reduction of TSS between 29 % and 39%.

### EXAMPLES 2-4.

Excess sludges, obtained from the biological treatment of urban wastewater, were subjected to:
Example 2: an alkaline hydrolysis pretreatment in the presence of an oxidizing agent (by addition of sodium hydroxide and hydrogen peroxide under the same conditions of Example 1);
Example 3 (comparison): a two-phase pretreatment: a first phase of acid hydrolysis carried out at 80°C for 180 min in the presence of an oxidizing agent, by adding hydrochloric acid and hydrogen peroxide (keeping the pH value between 1 and 3 and that of the redox potential between 300 and 500 mV), followed by a second phase of alkaline hydrolysis in the presence of an oxidizing agent (by addition of sodium hydroxide and hydrogen peroxide, fully identical to Example 2).
Example 4 (comparison): no pretreatment.

The three sludges (pretreated or not) were sent to a single-stage anaerobic digester operating under mesophilic conditions (T = 35-38°C). During the digestion process, the specific production of methane over time was measured, using automatic instrument AMPTS (Automatic Methane Potential Test System) capable of continuously providing the volume of gas produced under normal conditions (p = 1 atm, T = 0°C).

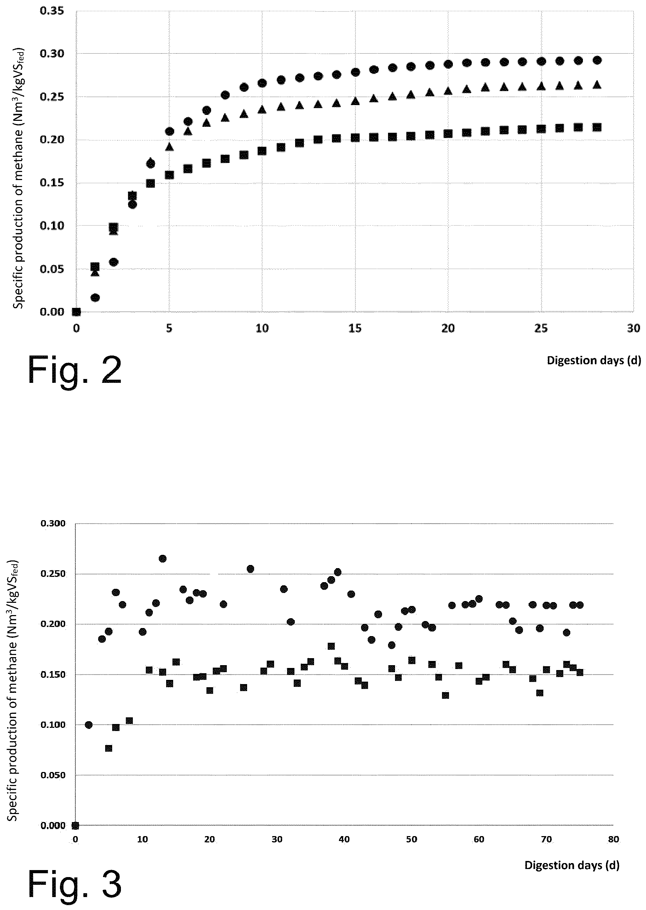

The results are shown in Figure 2, where the data of Example 2 are indicated with the symbol ●, those of Example 3 with the symbol ▲ and those of Example 4 with the symbol ■.

As can be seen from these data, the process carried out on the pretreated sludges according to the present invention (Example 2) shows an increase in the specific methane production of 36% compared to an anaerobic process without sludges pretreatment (Example 4). It should also be noted that the process carried out in accordance with the present invention (Example 2) also shows a significant increase in the specific production of methane (11% higher) compared to the process in which the sludges were pretreated by acid oxidative hydrolysis and subsequent alkaline oxidative hydrolysis, as described in Italian Patent No. 102016000121031 (Example 3).

### EXAMPLE 5.

Excess sludges, obtained from the biological treatment with activated sludges of urban waste water, were subjected to an alkaline hydrolysis pretreatment in the presence of an oxidizing agent (by addition of sodium hydroxide and hydrogen peroxide), under the same conditions as in Examples 1 and 2, then fed to an anaerobic digestion process in mesophilic regime (37°C) conducted in semi-continuous mode using a fully mixed reactor (CSTR) of 3 Liters, thermostated and equipped with a system for capturing and continuously measuring the volume of methane produced under normal conditions (p = 1 atm, T = 0°C).

The digestion test, conducted with a daily organic load (expressed in grams of Volatile Solids (VS)) equal to 1.5 gVS/L_{reactor} and with a hydraulic residence time of 20 days, was conducted for 75 days to evaluate long-term performance stability.

A digestion test was conducted using the same operating methods by feeding the same sludge as such, i.e. not subjected to the pretreatment of thermal oxidative hydrolysis.

The most evident effect of the pretreatment is to guarantee a feed which is rich in soluble organic substance, therefore readily bioavailable, to the anaerobic digestion process. The soluble COD in fact changes from 0.3 g/L of the sludges as such to 21.5 g/L of the hydrolyzed sludges.

Figure 3 shows the comparison between the specific methane productions obtained during the two digestion tests illustrated above. In Figure 3, the data obtained from the pretreated sludges are indicated with the symbol ●, while the symbol ■ relates to the data obtained from the non-pretreated sludges (as such).

It should be noted that, after a short transitory phase, both tests settle on almost stationary values of methane production, equal respectively to 0.15 ± 0.02 Nm³/kgVS_{fed} (digestion of sludges as such) and 0.22 ± 0,02 Nm³/kgVS_{fed} (digestion of pretreated sludges) .

The anaerobic process carried out in accordance with the present invention therefore shows an increase in the specific methane production of 42% with respect to an anaerobic process carried out under the same operating conditions on the same non-pretreated biological sludges. Extremely stable were also the removal efficiencies (%) of the total solids (24% ± 4% for the sludges as such and 32% ± 2% for the pretreated sludges) and volatiles (37% ± 5% for the sludges as such and 46% ± 2% for pretreated sludges).

Compared to the anaerobic process on non-pretreated sludges, a significant improvement in the dehydratability of the digested sludges were also observed. Experimental conditioning and centrifugation trials in fact pointed out the possibility of increasing the dehydration of the digested sludges by up to 33%, or of obtaining an increase in the dry content of about 5-7 percentage points.

## Claims

1. Process for producing biogas, which includes:
subjecting depuration sludges to a pretreatment phase which comprises, as the sole hydrolysis phase, a thermal alkaline oxidative hydrolysis phase;
subjecting the pretreated sludges to an anaerobic digestion process so as to obtain the biogas.

2. Process according to claim 1, wherein the depuration sludges are **characterized by** an overall sulphates and chlorides content equal to or greater than 800 mg/mL.

3. Process according to claim 1 or 2, wherein the depuration sludges are obtained from a treatment process of dairy industry wastewater, or wastewater deriving from biorefinery processes.

4. Process according to any one of the preceding claims, wherein the depuration sludges are subjected to a preliminary phase of mechanical disaggregation.

5. Process according to any one of the preceding claims, wherein the pretreatment phase of the depuration sludges do not comprise an oxidative acid hydrolysis phase.

6. Process according to any one of the preceding claims, wherein the pretreated sludges, before being subjected to the anaerobic digestion process, are subjected to neutralization so as to obtain a substantially neutral pH value.

7. Process according to any one of the preceding claims, wherein the thermal alkaline oxidative hydrolysis phase is carried out at a pH value from 8 to 12, preferably from 9.5 to 11.5.

8. Process according to any one of the preceding claims, wherein the phase of thermal alkaline oxidative hydrolysis is carried out with an oxidation-reduction potential maintained between -300 mV and -150 mV, preferably around -150 mV.

9. Process according to any one of the preceding claims, wherein the phase of thermal alkaline oxidative hydrolysis is carried out at a temperature from 35°C to 100°C, preferably from 60°C to 90°C.

10. Process according to any one of the preceding claims, wherein the alkaline hydrolysis phase is carried out in the presence of an oxidizing agent selected from:
a) air or oxygen enriched air, or liquid oxygen regasified in situ;
b) an inorganic peroxide, selected for example from: hydrogen peroxide (H₂O₂), ozone (O₃), perborates, percarbonates, perurea, peroxymonosulfates, peroxidisulfates, peroxyphosphates;
c) an organic peroxide, selected for example from:
peracids, monoalkyl peroxides, dialkyl peroxides, acyl peroxides, cyclic peroxides, ozonides;
d) non-peroxidic inorganic oxidizing compounds, such as hypochlorites, chlorites, chlorates, permanganates.

11. Process according to any one of the preceding claims, wherein the process of anaerobic digestion is carried out in single-stage or two-stage mode.

12. Process according to any one of the preceding claims, wherein the process of anaerobic digestion is carried out in the mesophilic regime, i.e. at a temperature from 30°C to 40°C, preferably from 34°C to 38°C.

13. Process according to any one of claims 1 to 11, wherein the process of anaerobic digestion is carried out in a thermophilic regime, i.e. at a temperature between 45°C and 70°C, preferably between 53°C and 60°C.
